# EUROPÄISCHE PATENTANMELDUNG

(11) **EP 2 367 312 A2**
(43) Veröffentlichungstag der Anmeldung: **21.09.2011**
(21) Anmeldenummer: 11000735.8
(22) Anmeldetag: 29.01.2011
(51) Int. Cl.: H04J 14/02

(54) **Kopfeinheit für die Übertragung von Telekommunikationssignalen in Netzen mit einem optischen Übertragungsmedium**

(30) Priorität: 29.01.2010 ES 201000125
(71) Anmelder: Televés, S.A., 15706 Santiago de Compostela (ES)
(72) Erfinder: De Uña Piñeiro, Rafael, 15706 Santiago de Campostela (ES); Fernandez Carnero, José Luis, 15706 Santiago de Campostela (ES)
(74) Vertreter: Dosterschill, Peter

(57) **Zusammenfassung**

Die Erfindung betrifft eine Kopfeinheit (2) zur Übertragung von Telekommunikationssignalen in Netzen mit einem optischen Übertragungsmedium, insbesondere einer optischen Faser, insbesondere in Netzen von Gemeinschaftsantennenanlagen mit einer optischen Faser.

Erfindungsgemäß ist ein Mischer (23) vorgesehen, der mindestens zwei Telekommunikationssignale unterschiedlicher Übertragungsfrequenzbänder, insbesondere in den Frequenzbereichen 950 bis 2150 MHz und 87 bis 862 MHz mischt, wenigstens ein elektro-optischer Wandler (25), der elektrische Signale an seinem Eingang in optische Signale an seinem Ausgang umwandelt, und ein optischer Multiplexer (26), der Signale bündelt und an seinem Ausgang wenigstens ein optisches Signal an ein Übertragungsnetz (3) abgibt, das wenigstens eine optische Faser aufweist.

## Beschreibung

Die vorliegende Erfindung betrifft eine Kopfeinheit für die Übertragung von Telekommunikationssignalen in Netzen mit mindestens einem optischen Übertragungsmedium, insbesondere in Netzen von Gemeinschaftsantennenanlagen mit optischen Fasern nach dem Oberbegriff des Anspruchs 1, sowie ein System zur Übertragung von Telekommunikationssignalen in Netzen mit einem optischen Übertragungsmedium.

Es sind MATV/SMATV-Systeme bekannt, das heißt Gemeinschafts-Antennenanlagen für den Empfang und die Übertagung von Signalen terrestrischen Fernsehens und/oder satellitengestützten Fernsehens. Diese Anlagen ermöglichen mittels einer gemeinschaftlichen Anlage den Fernsehsignalempfang sowie die Übertragung empfangener Signale an verschiedene Komponenten, die zum Beispiel einem Wohnbereich einer Gemeinschaft von Nachbarn zugeordnet sind. Diese Systeme bestehen im Wesentlichen aus einer Kopfeinheit, die unterschiedlichen Fernsehkanäle des terrestrischen und/oder des Satellitenfernsehens empfängt, aus einer Signalbearbeitungseinheit, die Signale empfangener Kanäle anpasst und verstärkt und aus einem Übertragungsnetz, das die Signale bis zum Benutzer überträgt. Derartige Netze sind üblicherweise mit Koaxialkabeln ausgestattet.

Im Markt sind derzeit eine große Anzahl derartiger Systeme mit Koaxialkabeln in Betrieb.

Hinzu kommen derzeit neue Gemeinschaft-Antennen-Systeme mit Übertragungsnetzen, die optische Fasern beziehungsweise Glasfasern aufweisen.

Bekanntlich weist eine Glasfaser viele Vorteile gegenüber einem Koaxialkabel als Trägerelement in Telekommunikationsnetzen, insbesondere in Gemeinschaft-Antennen-Netzen auf.

Ein Koaxialkabel weist in Bereich hoher Frequenzen eine größere Dämpfung als in Bereichen tiefer Frequenzen auf. Dies erfordert eine Anpassung (Abgleich, Entzerrung, Equalizer) der Signale in Abhängigkeit der Übertragungsfrequenz. Eine solche Anpassung/Abgleich ist bei der Übertragung über Glasfasern nicht erforderlich.

Die Dämpfung in einem Gemeinschafts-Antennen-Netz beträgt im Mittel ungefähr 40 Dezibel zwischen der Kopfeinheit und der Benutzersteckdose. Damit wird es erforderlich, in der Kopfeinheit eine Einrichtung zu installieren, die Ausgangssignale hoher Leistung generiert, was zu einem erhöhten Energieverbrauch führt.

Die Netztopologie führt dazu, dass Netze mit Koaxialkabeln gegenüber Glasfasern eher für Fehler bei der Verbindung bzw. Übertragung anfällig sind, was zur Bildung von Nullen bei der Amplitude-Frequenz-Antwort führen kann und dementsprechend bei digitalen Signalen dazu führt, dass keine Bilder dargestellt werden.

Außerdem ist die Isolierung passiver optischer Elemente größer als die Isolierung radioelektrischer Elemente.

Die Glasfaser ist immun gegenüber radioelektrischen beziehungsweise elektromagnetischen Störungen, die in Kabeln oder in Übertragungselementen auftreten können.

Weiterhin ist die Glasfaser gegenüber einem Koaxialkabel sehr flexibel, leicht handhabbar und verlustarm; ein Koaxialkabel hat einen größeren Durchmesser und weist eine entsprechende Steifigkeit auf.

Die Wartung einer Glasfaser ist weniger kostenaufwändig; ein Koaxialkabel büßt schneller an Qualität als eine Glasfaser ein.

Während sich zwei Koaxialkabel gegenseitig störend beeinflussen können, besteht eine solche Gefahr bei Glasfasern nicht: Optische Fasern sind wie schon ausgeführt gegenüber Koaxialkabeln unempfindlich gegenüber Signalübersprechen, elektromagnetische Störungen haben keinen Einfluss auf Datenübertragung in den optischen Fasern.

Die Gefahr von Bögen und Potenzialdifferenzen zwischen Masseanschlüssen sind bei Glasfasern nicht vorhanden.

Schließlich hat die Glasfaser eine größere Bandbreite als das Koaxialkabel.

Ausgehend von diesem Stand der Technik liegt der Erfindung die Aufgabe zugrunde, eine Kopfeinheit für Telekommunikationsnetze, insbesondere für (satellitengestützte) Gemeinschafts-Antennenanlagen (MATV/SMATV) zu schaffen, die eine effiziente Nutzung des angeschlossenen Übertragungsnetzes ermöglicht.

Diese Aufgabe wird mittels einer Kopfeinheit gemäß Anspruch 1 gelöst.

Die Erfindung zeichnet sich durch eine Mehrzahl von Vorteilen aus.

Bei einem vorteilhaften Ausführungsbeispiel gemäß der Erfindung ist der Kopfeinheit ein Mischer zugeordnet, der mindestens zwei Telekommunikationssignale unterschiedlicher Übertragungsfrequenzbänder, insbesondere in den Frequenzbereichen 950 bis 2150 MHz und 87 bis 862 MHz mischt, weiterhin wenigstens ein elektro-optischer Wandler, der radioelektrische (Hochfrequenz-)Signale an seinem Eingang in optische Signale an seinem Ausgang umwandelt, und ein optischer Multiplexer, der Signale bündelt und an seinem Ausgang wenigstens ein optisches Signal an ein Übertragungsnetz abgibt, das wenigstens eine optische Faser bzw. Glasfaser aufweist.

Dies ist mit dem Vorteil verbunden, dass die Bandbreite der optischen Faser besser genutzt wird, indem eine Mehrzahl von Signalen unterschiedlicher Wellenlänge gleichzeitig auf einer Glasfaser übertragen wird.

Bei einem weiteren vorteilhaften Ausführungsbeispiel gemäß der Erfindung ist die Kopfeinheit **dadurch gekennzeichnet, dass** sie vier Mischer und vier elektro-optische Wandler aufweist, und dass der optische Multiplexer an seinem Ausgang wenigstens vier optische Signale an das Übertragungsnetz abgibt.

Dies ist mit dem Vorteil verbunden, dass bei dieser direkten Anwendung in Gemeinschaftsantennen-Systemen die gleichzeitige Übertragung von Fernsehkanälen in vier Frequenzbändern (950 - 2150 MHz) entsprechend der vier Polaritäten eines Satellitensignals und von Signalen des terrestrischen Fernsehens (87 - 862 MHz) auf einer einzigen Glasfaser ermöglicht wird.

Bei einem weiteren vorteilhaften Ausführungsbeispiel gemäß der Erfindung ist die Kopfeinheit **dadurch gekennzeichnet, dass** der optische Multiplexer einen Eingang für ein Signal eines Rückkanals aufweist.

Dies ist mit dem Vorteil verbunden, dass der Rückkanal auf dem gleichen Übertragungsmedium - wie z.B. die Fernsehsignale - mit übertragen wird.

Bei einem weiteren vorteilhaften Ausführungsbeispiel gemäß der Erfindung ist die Kopfeinheit **dadurch gekennzeichnet, dass** optische Signale, die in dem einzigen optischen Übertragungsmedium übertragen werden, eine Wellenlänge zwischen 1470 und 1530 haben.

Dies ist mit dem Vorteil einer größeren Integration dieser Ausführungsform der Kopfeinheit verbunden, und mit dem Vorteil einer Ersparnis von Modulen, die die Kopfeinheit bilden.

Dies hat den Vorteil, dass auf dem Markt verfügbare Komponenten (z.B. Generatoren optischer Signale, Laser) verwendet werden können

Bei einem weiteren vorteilhaften Ausführungsbeispiel gemäß der Erfindung besteht das System zur Übertragung von Telekommunikationssignalen in Netzen mit einem optischen Übertragungsmedium, insbesondere in Netzen von Gemeinschaftsantennen, aus einer vorstehend genannten Kopfeinheit, einem Übertragungsnetz und wenigstens einem Benutzerendgerät.

Bei einem weiteren vorteilhaften Ausführungsbeispiel gemäß der Erfindung ist das System **dadurch gekennzeichnet, dass** das Übertragungsnetz wenigstens einen Übertragungswegabschnitt mit wenigstens einer optischen Faser aufweist.

Dies erleichtert den Entwurf des Übertragungsnetzes trägt zu einer Kostenreduzierung bei.

Bei einer weiteren vorteilhaften Ausführungsform gemäß der Erfindung weist das Benutzerendgerät wenigstens einen optischen Demultiplexer auf, der optische Signale aus dem Übertragungsnetz entbündelt (demultiplext), wenigstens einen opto-elektrischen Wandler, der optische Signale in elektrische Signale umwandelt, und wenigstens einen elektro-optischen Wandler für das Signal des Rückkanals. Dies ermöglicht in vorteilhafter Weise, über eine optische Faser zum Beispiel vier Frequenzbänder (950 bis 2150 MHz) zu übertragen, die den vier Polaritäten eines Satellitenfernsehsignals entspricht und gleichzeitig das Frequenzband (87 bis 862 MHz) des terrestrischen Fernsehens.

Insbesondere beträgt die Wellenlänge des Rückkanals 1310 Nanometer. Damit lassen sich Einrichtungen verwenden, die bereits auf dem Markt erhältlich sind.

Bei einem weiteren Ausführungsbeispiel gemäß der Erfindung ist das System **dadurch gekennzeichnet, dass** es einen Rückkanal aufweist. Dies ermöglicht die Verwendung von Steuersignalen und die Anforderung von Diensten durch die Benutzer.

Zum weiteren Verständnis der Erfindung wird nun beispielhaft die Kopfeinheit für Telekommunikationsnetze, insbesondere für Gemeinschafts-Antennenanlagen (MATV) bzw. für satellitengestützte Gemeinschafts-Antennenanlagen (SMATV) anhand der Zeichnung beschrieben.

Es zeigt
- Figur 1: ein Signalübertragungssystem gemäß der Erfindung in einer Sternstruktur bzw. in Baum-Zwegi-Struktur,
- Figur 2: ein Blockschaltbild der Kopfeinheit gemäß der Erfindung;
- Figur 3: das Blockschaltbild eines Benutzerendgeräts in einem Signal-übertragungssystem gemäß der Erfindung, und
- Figur 4: ein Diagramm mit einem Beispiel der frequenzmäßigen Zuordnung eines Rückkanals und von Fernsehsignalen auf dem optischen Übertragungsmedium.

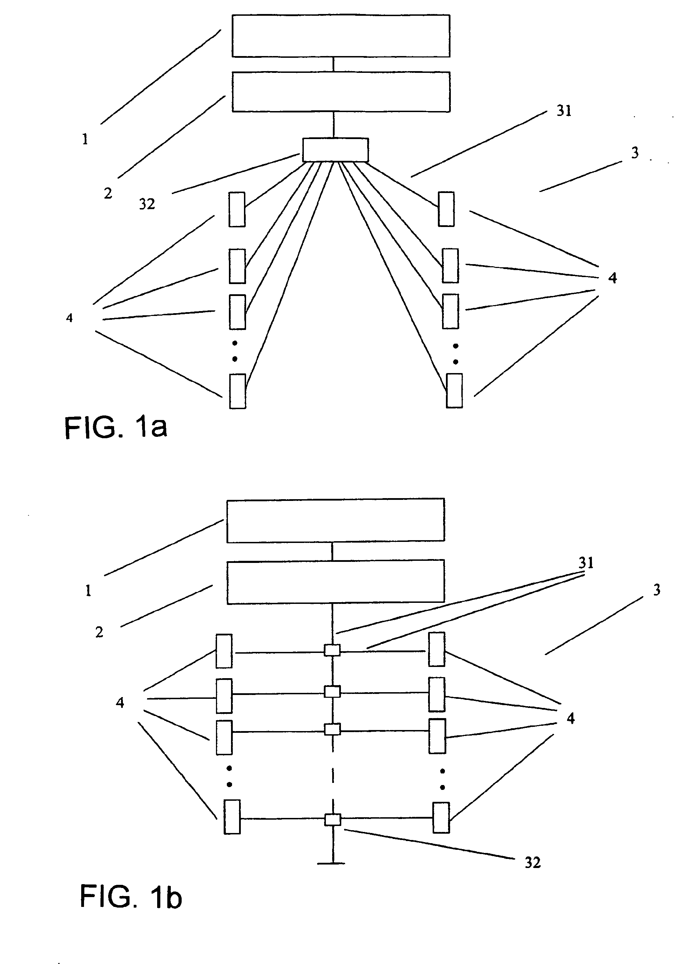

Wie in Figur 1 dargestellt, besteht das Signalübertragungssystem einer Gemeinschafts-antennen-Anlage aus einem System 1, das Signale aufnimmt, und die Funktion hat, verschiedene Telekommunikationssignale (Radio, Fernsehen, Internet, Telekommunikationsdienste), die insbesondere von terrestrischen Sendestationen oder von Satellitenstationen stammen, aufzunehmen. Das System besteht weiterhin aus einer Kopfeinheit 2, die die Funktion hat, empfangene Signale anzupassen, aus einem Übertragungsnetz 3, bestehend aus einem physischen Trägermedium (Koaxialkabel, Glasfaser, usw), das in dem erfindungsgemäßen System insbesondere aus mindestens einer optischen Faser (Lichtwellenleiter, Glasfaser) besteht und aus passiven Übertragungselementen (Splitter) 32, die die Funktion haben, die Signale von der Kopfeinheit 2 zu den Benutzerendgeräten 4 zu transportieren.

Die Benutzerendgeräte 4 sind die Komponenten, die die Funktion haben, die Signale an die vorhandenen Empfangseinrichtungen im Wohnbereich des jeweiligen Benutzers (Radioempfänger, Fernsehempfänger, Computer usw.) anzupassen.

In dem in Figur 1a dargestellten Ausführungsbeispiel gemäß der Erfindung hat das Übertragungsnetz 3 eine Sternstruktur, das heißt, ausgehend von einer passiven Übertragungs-Komponente (Splitter, Aufteilelement) 32, die am Ausgang der Kopfeinheit 2 angeordnet ist, wird direkt die Übertragung der Signale über wenigstens eine optische Faser zu jedem Benutzerendgerät 4 durchgeführt. In diesem Fall besteht das Übertragungsnetz 3 aus zwei Wegstrecken, eine von der Kopfeinheit 2 zu dem passiven Übertragungselement (Aufteilelement, Splitter) 32 und die andere von dem passiven Übertragungselement 32 zu dem Benutzerendgerät 4.

Eine andere an sich bekannte Lösung des Übertragungsnetzes, die in Figur 1b dargestellt ist, hat die Baum-Zweig-Struktur, in dem ausgehend von der Kopfeinheit 2 die Signale über mittels eine Glasfaser ("Baumstamm") übertragen werden. An dieser Baumstamm-Glasfaser sind passive Übertragungskomponenten 32 angekoppelt, die die Signale aufgeteilen, wobei die aufgeteilten Signale über wenigstens eine Glasfaser zu den Benutzerendgeräten 4 geführt werden. In diesem Fall besteht das Übertragungsnetz 3 aus zwei Wegstrecken, aus einer ersten Wegstrecke (BaumStamm) von der Kopfeinheit 2 über die passiven Übertragungskomponenten 32 bis zum Ende dieser Wegstrecke , sowie aus einer zweiten Wegstrecke von den passiven Übertragungskomponenten 32 bis zu den Benutzerendgeräten 4.

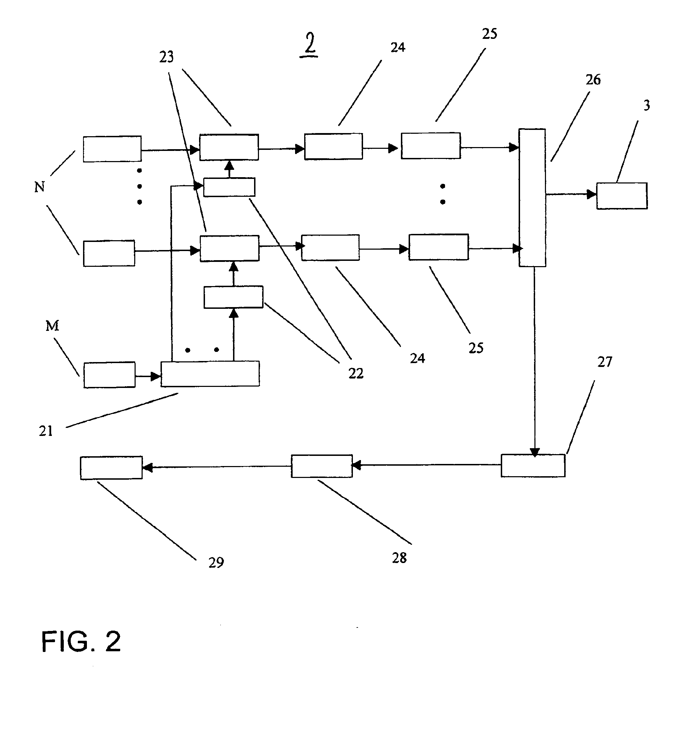

Die Figur 2 zeigt ein Blockschaltbild einer Kopfeinheit 2 gemäß der Erfindung. Diese Kopfeinheit 2 besteht aus N Eingängen für Telekommunikationssignale, beispielsweise für Satellitenfernsehsignale im Band von 950 bis 2150 MHz und aus wenigstens einem weiteren Eingang M für andere Telekommunikationssignale, beispielsweise für Signale terrestrischen Fernsehens im Band von 87 bis 862 MHz.. Das Eingangssignal M wird von dem Verteiler 21 in so viel Signale aufgeteilt wie Eingangssignale (zum Beispiel Satellitenpolaritäten) vorhanden sind.

Die an den Ausgängen des Verteilers 21 abgegebenen Signale werden durch Verstärker 22 verstärkt, um den im Verteiler 21 verlorenen Pegel wiederherzustellen. Jedes der von den Eingängen N kommenden Signale wird in den Mischern 23 mit den Signalen gemischt, die von dem Verteiler 21 ausgegeben werden.

Der Ausgang der Mischer 23 ist mit Anpassungsschaltungen 24 verbunden, von denen jede Anpassungsschaltung 24 eine Schaltung aufweist, die geräuscharm Linearität korrigiert. Die Anpassungsschaltungen 24 passen die Signale auf optimale Pegel an, um diese Signale in elektro-optische Wandler 25 einzuführen, die die (radio-)elektrischen (Hochfrequenz-)Signale, die an ihrem Eingang anliegen, in optische Signale umzuwandeln und an ihrem Ausgang abgeben.

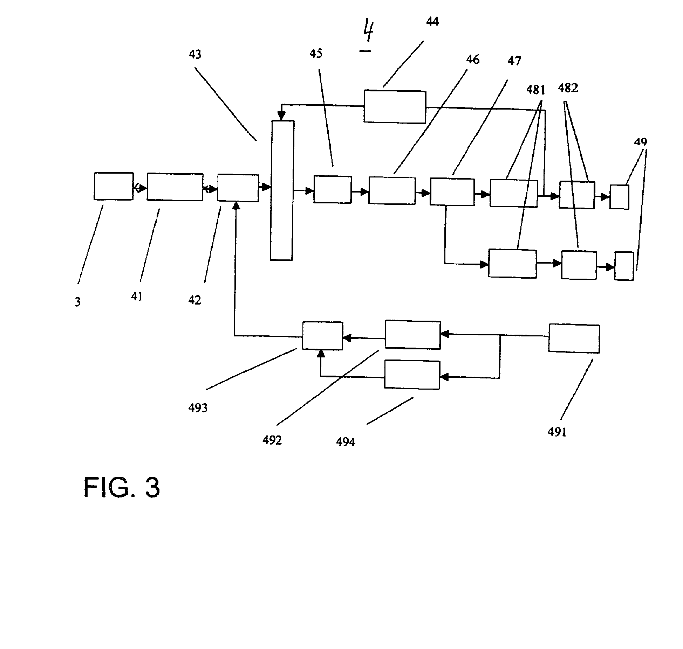

Die Ausgänge der N elektro-optischen Umwandler 25, entsprechend der Übertragung CWDM (Coarse Wave Length Division Multiplexing, zum Beispiel für Signale mit Wellenlängen, die 20 Nanometer voneinander beabstandet sind) werden in einen optischen Multiplexer 26 mit N Eingängen eingeführt. Dessen Ausgang ist mit dem Übertragungsnetz 3 verbunden, das beispielsweise eine einzige Glasfaser aufweist. Damit sind in der Glasfaser des Übertragungsnetzes N Signale unterschiedlicher Wellenlänge vorhanden, wobei jedes Signal durch die Bündelung (Mischung) des Signals von dem Eingang M mit jedem der Signale von den Eingängen N generiert wird. Wie weiter in Figur 2 dargestellt verfügt die Kopfeinheit 2 über einen Rückkanal, wobei die Kopfeinheit einen opto-elektrischen Rückkanal-Umwandler 27 aufweist, der das optische Signal des Ausgangs des optischen Multiplexers 26 umwandelt und das umgewandelte elektrische Signal an einen Rückkanal-Verstärker 28 abgibt, der seinerseits das Signal über einen Rückkanalausgang 29 an ein nicht näher dargestelltes Rückkanal-Bearbeitungssystem abgibt. Dieses bearbeitet empfangene Rückkanalsignale unterschiedlicher Benutzerendgeräte (4 in Figuren 1 und 3).

Der Rückkanal ermöglicht es, von den Benutzerendgeräten 4 beliebige Informationen, insbesondere aber Steuerinformationen, Informationen, die Dienstleistungen bezeichnen, an die Kopfeinheit 2 zu übertragen, die diese Informationen bearbeitet. Jedem Benutzerendgerät 4 wird ein Zeitfenster zugeordnet; alle Rückkanalinformationen werden in einem Zeitmultiplexverfahren TDMA übertragen.

In einem nicht ausschließenden Beispiel der praktischen Umsetzung der Erfindung ist die Anzahl der Eingangssignale N gleich 4, entsprechend jeweils einer Satellitenpolarität. Damit besetzt jedes Eingangssignal eine Bandbreite zwischen 950 und 2150 MHz und enthält Satellitenfernsehsignale. Der Eingang M entspricht einem Signal terrestrischen Fernsehens im Bereich 87 bis 862 MHz, der Kanäle des terrestrischen Fernsehens belegt, dies sind elektrische Signale. An dem Ausgang der Kopfeinheit 2, der mit dem Übertragungsnetz 3 verbunden ist, stehen vier optische Signale an mit Wellenlängen zwischen 1470 und 1530 Nanometer.

Figur 3 zeigt das Blockschaltbild eines Benutzerendgeräts 4, das über einen optischen Eingang 41 mit dem Übertragungsnetz 3 verbunden ist, das beispielsweise aus einer einzigen optischen Faser besteht. Der optische Eingang 41 ist mit einem optischen Demultiplexer 42 verbunden, der N optische Signale, die in dem Übertragungsnetz 3 vorliegen, trennt beziehungsweise entbündelt.

Ein optischer Schalter 43, der von einer Steuerschaltung 44 gesteuert wird, wählt eines der M optischen Signale aus, die am Ausgang des optischen Demultiplexers 42 anliegen. Die Auswahl wird beispielsweise unter Verwendung des Systems "Diseq" zur Auswahl von Bändern und Polaritäten von Satellitensignalen durchgeführt. Das ausgewählte Signal wird in den opto-elektrischen Umwandler 45 eingeführt und dort in ein elektrisches Signal umgewandelt. Ein geräuscharmer Verstärker 46 verstärkt das Signal, bevor es in eine Bandtrenneinrichtung 47 eingeführt wird, die die Funktion hat, die Frequenzbänder zu trennen, die das radioelektrische (Hochfrequenz-)Signal bilden. Jedes so erhaltene Frequenzband wird einer Gewinnsteuerungsschaltung 481 und anschließend einem Verstärker 491 und abschließend einem Ausgang 49 des Benutzerendgeräts 4 zugeführt.

Ebenso kann das Benutzerendgerät 4 mit einem Radiofrequenzsignal 491 für ein Radiofrequenzsignal (elektrisches Hochfrequenzsignal) des Rückkanals ausgestattet sein, das einer Anpassungsschaltung 492 und danach einem elektro-optischen Rückkanal-Umwandler 493 zugeführt wird, der dieses Signal in ein optisches Signal umzuwandet, das dann in einen optischen Demultiplexer 42 eingeführt wird. Weiterhin ist der Rückkanaleingang 491 mit einem ultraschnellen Radiofrequenzerkenner 494 verbunden, der die Aktivierung und die Deaktivierung des elektro-optischen Rückkanal-Umwandlers 493 steuert, wobei eine Steuerung im Fall von Kollisionen erfolgen kann.

In einem nicht ausschließenden Ausführungsbeispiel einer praktischen Umsetzung der Erfindung ist die Anzahl der Eingangssignale N am optischen Eingang 41 des Benutzerendgeräts 4 gleich 4 optische Signalen mit Wellenlängen zwischen 1470 und 1530 Nanometer, wobei jedes der Signale aus Kanälen entsprechend der Polaritäten des Satellitenfernsehsignals und zusätzlich der Kanäle des terrestrischen Fernsehens besteht.

Nachdem das optische Signal ausgewählt ist und in ein radioelektrisches Signal transformiert ist, liegt ein Signal vor, das zusammengesetzt ist aus einem Signal der Bandbreite zwischen 950 und 2150 MHz, das Kanäle des Satellitenfernsehens umfasst, und ein Signal mit der Bandbreite von 87 bis 862 MHz, das Kanäle des terrestrischen Fernsehen enthält. Jedes der beiden Signale ist an einem der Ausgänge 49 des Benutzerendgeräts 4 vorhanden.

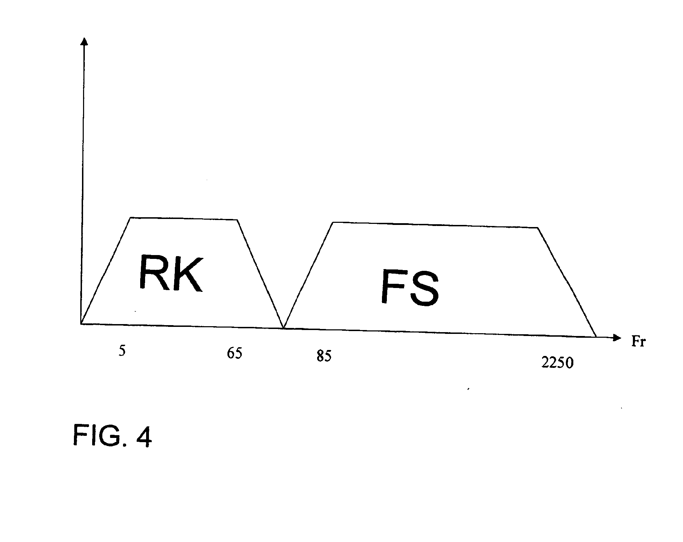

Ein Beispiel der frequenzmäßigen Zuordnung eines Rückkanals RK und von Fernsehsignalen FS auf dem optischen Übertragungsmedium ist in Figur 4 dargestellt, wobei die Frequenz in MHz wiedergegeben ist.

Bezugszeichen:
- 1: System zur Erfassung von Signalen
- 2: Kopfeinheit
- 21: Verteiler
- 22: Verstärker
- 23: Mischer
- 24: Anpassungsschaltungen
- 25: Elektro-optischer Umwandler
- 26: Optischer Multiplexer (Wavelength Multiplexing WDM)
- 27: Opto-elektrischer Umwandler für Rückkanal
- 28: Verstärker für Rückkanal
- 29: Ausgang für Rückkanal
- 3: Übertragungsnetz (Verteilnetz)
- 31: Physischer Träger
- 32: Passives Übertragungselement, Aufteilelement, Splitter
- 4: Benutzerendgerät
- 41: Eingang für optisches Signal
- 42: Optischer Multiplexer
- 43: Optischer Schalter
- 44: Steuerschaltung
- 45: Opto-elektrischer Wandler
- 46: Verstärker
- 47: Komponente, die Frequenzbänder trennt
- 481: Schaltung zur Steuerung des Gewinns (AGC)
- 482: Verstärkerschaltung
- 49: Ausgang
- 491: Eingang für Rückkanal ( Radiofrequenzsignal)
- 492: Anpassungsschaltung
- 493: Elektro-optischer Umwandler für Rückkanal
- 494: Ultraschneller Radiofrequenzdetektor
- FS: Fernsehsignale
- RK: Rückkanal

## Patentansprüche

1. Kopfeinheit (2) zur Übertragung von Telekommunikationssignalen in Netzen mit einem optischen Übertragungsmedium, insbesondere einer optischen Faser, insbesondere in Netzen von Gemeinschaftsantennenanlagen mit einer optischen Faser,
**dadurch gekennzeichnet,**
**dass** ein Mischer (23) vorgesehen ist, der mindestens zwei Telekommunikationssignale unterschiedlicher Übertragungsfrequenzbänder, insbesondere in den Frequenzbereichen 950 bis 2150 MHz und 87 bis 862 MHz, mischt, wenigstens ein elektro-optischer Wandler (25), der elektrische Signale an seinem Eingang in optische Signale an seinem Ausgang umwandelt, und ein optischer Multiplexer (26), der an seinem Ausgang wenigstens ein optisches Signal an ein Übertragungsnetz (3) abgibt, das wenigstens eine optische Faser aufweist.

2. Kopfeinheit nach Anspruch 1, **dadurch gekennzeichnet, dass** sie vier Mischer (23) und vier elektro-optische Wandler (25) aufweist, dass der optische Multiplexer (26) Signale bündelt und an seinem Ausgang vier optische Signale an das Übertragungsnetz (3) abgibt.

3. Kopfeinheit nach einem der vorstehenden Ansprüche, **dadurch gekennzeichnet, dass** der optische Multiplexer (26) einen Eingang für ein Signal eines Rückkanals (RK) aufweist.

4. Kopfeinheit nach Anspruch 2 oder 3, **dadurch gekennzeichnet, dass** die vom elektro-optischen Wandler (25) abgegebenen optischen Signale, die über die eine einzige optische Faser übertragen werden, eine Wellenlänge zwischen 1470 und 1530 Nanometer haben und/oder dass der Rückkanal (RK) eine Wellenlänge von 1310 Nanometer hat.

5. System zur Übertragung von Telekommunikationssignalen in Netzen mit einem optischen Übertragungsmedium, insbesondere in Netzen von Gemeinschafts-antennen, bestehend aus einer Kopfeinheit (2), einem Übertragungsnetz (3) und wenigstens einem Benutzerendgerät (4),
**gekennzeichnet,**
**durch** eine Kopfeinheit (2) nach einem der vorstehenden Ansprüche.

6. System nach Anspruch 5, **dadurch gekennzeichnet, dass** das Übertragungsnetz (3) wenigstens einen Übertragungswegabschnitt mit wenigstens einer optischen Faser aufweist.

7. System nach Anspruch 5 oder 6, **dadurch gekennzeichnet, dass** es einen Rückkanal (RK) aufweist.

8. System nach einem der Ansprüche 5 bis 7, **dadurch gekennzeichnet, dass** das Benutzerendgerät (4) wenigstens einen optischen Demultiplexer (41) aufweist, der optische Signale aus dem Übertragungsnetz entbündelt wenigstens einen opto-elektrischen Wandler (42), der optische Signale in elektrische Signale umwandelt, und wenigstens einen elektro-optischen Wandler (43) für das Signal des Rückkanals (RK).

9. System nach Anspruch 7 oder 8, **dadurch gekennzeichnet, dass** die Wellenlänge des Rückkanals (RK) 1310 Nanometer beträgt.
